# FASCICULE DE BREVET EUROPEEN

(11) **EP 3 601 015 B1**
(45) Date de publication et mention de la délivrance du brevet: **12.01.2022**
(21) Numéro de dépôt: 18712674.3
(22) Date de dépôt: 09.03.2018
(51) Int. Cl.: B62D 21/18, B62D 49/06

(54) **TRACTEUR MULTITACHE ELECTRIQUE**
ELEKTRISCHER MEHRZWECKTRACTOR
ELECTRICAL MULTIPUPROSE TRACTOR

(30) Priorité: 20.03.2017 FR 1770274
(43) Date de publication de la demande: 05.02.2020
(73) Titulaire: Sabi Agri, 63360 Saint-Beauzire (FR)
(72) Inventeur: PRÉVAULT, Alexandre, 63530 Enval (FR)
(74) Mandataire: Gabriel, Franck
(86) Numéro de dépôt international: PCT/IB2018/051558
(87) Numéro de publication internationale: WO 2018/172879

(56) Documents cités:
- DE-C- 966 154
- NL-C- 1 040 562
- US-A1- 2006 012 144

## Description

### DOMAINE TECHNIQUE DE L'INVENTION

La présente invention concerne un tracteur multitâche comprenant une structure de base, des roues et/ou chenilles, au moins un moteur et des outils.

### ETAT DE LA TECHNIQUE ANTERIEURE

**Les** tracteurs multitâches sont aujourd'hui bien connus et utilisés dans divers domaines agricoles. Ils sont destinés à effectuer plusieurs tâches avec une seule machine pour augmenter le rendement et diminuer l'effort physique des exploitants. Pour assurer un bon rendement, le tracteur doit comporter plusieurs zones de travail. De nombreuses configurations existent déjà avec deux zones de travail, qui sont agencées de différentes façons à l'arrière, et à l'avant du tracteur.

De manière générale, la zone centrale est occupée par la cabine, le moteur et les organes de transmission permettant de d'entraîner les roues.

De manière générale, chaque type de tracteurs existant prévoit une configuration spécifique d'outils dédiés à une seule et unique tâche, comme par exemple les moissonneuses-batteuses, ou arracheuses de betteraves. Les différentes configurations des zones de travail des tracteurs sur le marché permettent de trouver celui qui sera le plus adapté au travail demandé.

D'autres exemples de solutions sont présentés ci-après.

Le document FR2370621 décrit un tracteur à deux essieux et à quatre roues, à caisse décentrée d'un côté et poste de conduite de l'autre. Il dispose d'une zone de travail située à l'arrière et le moteur se trouve à l'avant du poste de conduite.

Le document US5335739 décrit un véhicule agricole surélevé pour les cultures avec une zone de travail située entre les quatre roues, celles-ci pouvant tourner sur un arc supérieur à 90° ce qui permet à la machine de tourner mais aussi de translater.

Le document FR2416153 décrit une arracheuse de betteraves.

Le document WO2015070301 décrit un tracteur destiné à être utilisé pour la récolte de tubercules.

Ces machines spécifiques sont réservées uniquement à cette fonction unique.

Le document FR3032593 décrit un engin agricole particulièrement adapté aux travaux de maraîchage car il comporte un siège transformable qui permet à l'opérateur de se mettre en position assise ou agenouillée. L'engin ne comporte qu'une zone de travail centrale.

Le document FR2284506 décrit un tracteur doté de plusieurs zones de fixation d'outillage. Il peut être équipé de surface de chargement et comporte au moins une prise de force. De nombreux organes mécaniques occupent les zones de travail.

Le document NL1040562 décrit un tracteur électrique selon le préambule de la revendication 1.

Pour pallier ces différents inconvénients, l'invention prévoit différents moyens techniques.

### EXPOSE DE L'INVENTION

Tout d'abord, un premier objectif de l'invention consiste à prévoir un tracteur multitâche mieux adapté aux exigences de l'agriculture moderne.

Un autre objectif de l'invention consiste à prévoir un tracteur peu encombrant dont la construction est peu coûteuse.

Un autre objectif de l'invention consiste à prévoir un tracteur adapté pour un espace de travail restreint.

Un autre objectif de l'invention consiste à prévoir un tracteur relativement silencieux pour travailler dans des espaces confinés.

Un autre objectif de l'invention consiste à prévoir un tracteur adapté aux terrains fragiles.

Un autre objectif de l'invention consiste à prévoir un tracteur dont la mise en œuvre est simple et permet ainsi d'être configuré et reconfiguré rapidement et facilement.

Encore un autre objectif de l'invention consiste à prévoir un tracteur pouvant être piloté par un opérateur et/ou par une intelligence artificielle de façon autonome.

Pour ce faire, l'invention prévoit un tracteur multitâche comprenant une structure de base, des roues et/ou chenilles, au moins un moteur électrique, des premiers moyens outils susceptibles d'effectuer un travail dans une zone de travail A située d'un premier côté de la structure de base, des seconds moyens outils susceptibles d'effectuer un travail dans une zone de travail B située du deuxième côté de la structure de base, un moyen de pilotage ; la structure de base étant constituée d'un cadre périphérique définissant une ouverture formant une zone de travail centrale C' et portant des roues et/ou des chenilles avec une motorisation intégrée, dans lequel la zone de travail centrale C' est dépourvue de tout organe de traction et/ou transmission en liaison avec le déplacement du tracteur.

Selon une telle architecture, la zone de travail C' se trouve de ce fait libre de tout organe mécanique. L'espace délimité par le cadre est entièrement disponible pour poser un ou plusieurs outils, et /ou un ou plusieurs opérateurs manœuvrant les outils et/ou intervenant sur le sol.

Grâce à cette architecture, on obtient un accès vers le sol, au centre du cadre et au-dessus de ce dernier. La zone de travail est libre sur toute sa hauteur. Le cadre et l'espace libre permettent de disposer un ou plusieurs outils. Dans le cas où d'autres outils sont prévus dans les zones adjacentes A et B, l'espace libre de la zone C' permet de faire coopérer entre eux des éléments des différentes zones. Par exemple, des légumes extraits par un outil en zone A peuvent être convoyés par un convoyeur logé en zone C' vers un outil de travail ou une benne située en zone B.

Selon un mode de réalisation avantageux, la zone de travail se prolonge au dessus du cadre périphérique. La zone est libre de toute cabine ou poste de pilotage. Cette zone supérieure est donc utilisable pour des outils, et/ou pour un ou plusieurs opérateurs.

Selon un autre mode de réalisation avantageux, la zone de travail se prolonge au dessous du cadre périphérique.

Selon cette architecture, la zone libre s'étendant du dessus jusqu'au dessous du cadre permet d'une part un accès effectif au sol depuis n'importe quel point de la zone de travail ou même hors de celle-ci, et d'autre part un accès visuel au sol pour permettre par exemple de contrôler des tâches en cours de réalisation.

De manière avantageuse, le cadre périphérique comprend une pluralité de points de positionnement d'outils. Cette multiplicité de points permet à l'opérateur de configurer le tracteur selon ses besoins.

Selon un mode de réalisation avantageux, la zone de travail est située entre les roues et/ou chenilles du tracteur.

Egalement de manière avantageuse, au moins deux roues et/ou chenilles comportent un moteur électrique, qui permettent au tracteur d'avancer de façon bidirectionnelle et tourner. La zone C'est libérée grâce aux moteurs intégrés dans les roues. Ces moteurs électriques peuvent assurer une vitesse constante et plus précise que les moteurs thermiques. De plus, le rapport poids/puissance favorable du tracteur lui permet de conserver les sols meubles en relativement bon état.

Selon l'invention le cadre périphérique comporte au moins deux longerons portant au moins une batterie qui alimente les moteurs des roues. Cette configuration permet également de désencombrer la zone C' et de répartir le poids sur le tracteur et d'avoir un centre de gravité bas.

Selon un autre mode de réalisation avantageux, au moins un adaptateur rotatif alimenté par lesdites batteries est prévu. Ceci permet à l'opérateur de travailler dans une ou plusieurs zones.

De manière avantageuse, au moins deux roues sont de type roues folles, et préférablement non motorisées.

Egalement de manière avantageuse, les roues folles sont montées sur un axe unique pivotant.

Ces caractéristiques, en plus du mode de direction par les roues motrices, permettent de s'affranchir de roues directionnelles. Par ailleurs l'axe pivotant et le centre de gravité bas permettent au tracteur d'avoir une bonne stabilité sur les terrains accidentés.

Selon un mode de réalisation avantageux, tous les outils et le système du tracteur sont interchangeables. Ce dispositif permet une grande souplesse architecturale. Il est possible d'assembler et de démonter les différentes parties du tracteur facilement et rapidement.

### DESCRIPTION DES FIGURES

Tous les détails de réalisation sont donnés dans la description qui suit, complétée par les figures, présentées uniquement à des fins d'exemples non limitatifs, et dans lesquelles :
- la figure 1 est une vue en perspective d'un exemple de tracteur vu depuis l'avant ;
- la figure 2 est une vue en perspective d'un exemple de tracteur vu depuis l'arrière ;
- la figure 3 est une vue du dessus du tracteur de la figure 1 ;
- la figure 4 est une vue en élévation du tracteur de la figure 1;
- la figure 5 est une vue de face du tracteur de la figure 1 montrant les roues folles sur un terrain incliné ;
- la figure 6 est une vue en perspective d'un exemple d'application d'un tracteur ;
- la figure 7 est une vue en élévation de l'exemple de la figure 6 ;
- les figures 8, 9 et 10 illustrent un deuxième exemple d'application du tracteur ;
- la figure 11 illustre un troisième exemple d'application du tracteur ;
- la figure 12a est une vue en perspective d'un exemple de tracteur ;
- la figure 12b est une vue en perspective d'un exemple de tracteur sans poste de pilotage ;
- la figure 13a est une vue en perspective d'un exemple de tracteur pourvu de chenilles et sans poste de pilotage ;
- la figure 13b est une vue en élévation d'un exemple de tracteur pourvu de chenilles, situé dans une pente.

### DESCRIPTION DETAILLEE DE L'INVENTION

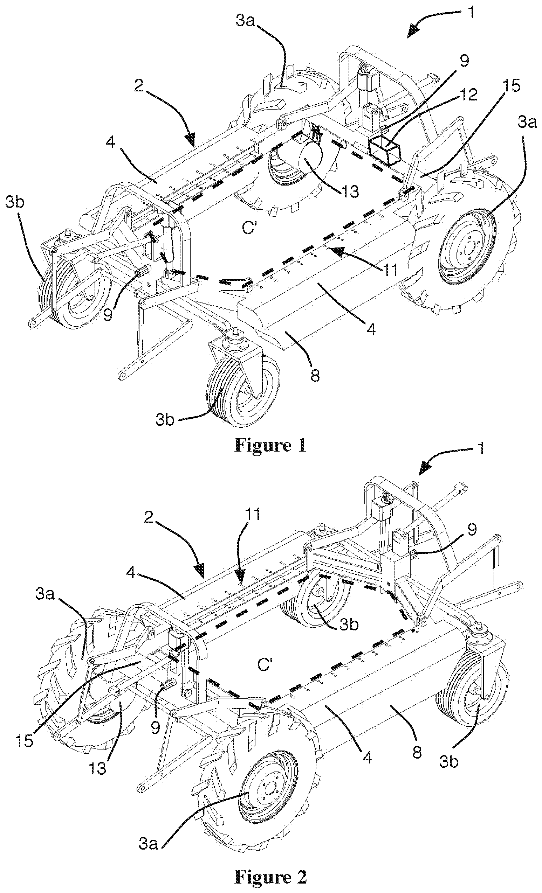

La figure 1 illustre un exemple de réalisation d'un tracteur 1 comprenant une structure de base 2 montée sur roues 3a et 3b. Dans cet exemple, le cadre est fermé et défini une ouverture centrale C'. Une portion du cadre est constituée par deux longerons 4 portant au moins une batterie 8. De cette façon, la zone de travail C' est complètement libre et disponible pour loger des outils, pour créer différentes configurations de travail et/ou des zones de visibilité vers le sol sur lequel le travail est en cours.

Le poids du tracteur est bien réparti avec un centre de gravité bas, ce qui lui procure une excellente stabilité. L'arrière du cadre 2 est constitué par une barre transversale 15. Les longerons 4 et cette barre transversale 15 forment des surfaces comportant une pluralité de points 11 de positionnement ou fixation d'outils. Ces points 11 de fixation multiples confèrent une grande modularité et un vaste choix de positionnement des outils. Un siège 14 et/ou un support pour l'opérateur peut être positionné dans cet espace.

Le tracteur comporte au moins deux roues motrices 3a, dans lesquelles un moteur électrique 13 est intégré. Dans l'exemple illustré, deux roues folles 3b permettent de compléter l'ensemble. Un moyen de pilotage permet de diriger le tracteur. Les changements de direction sont effectués par des vitesses de rotation différentes des roues motorisées 3a. Les roues folles 3b, en s'alignant en fonction d'un effort fourni par les roues 3a, permettent de réaliser les changements de direction sans contrainte.

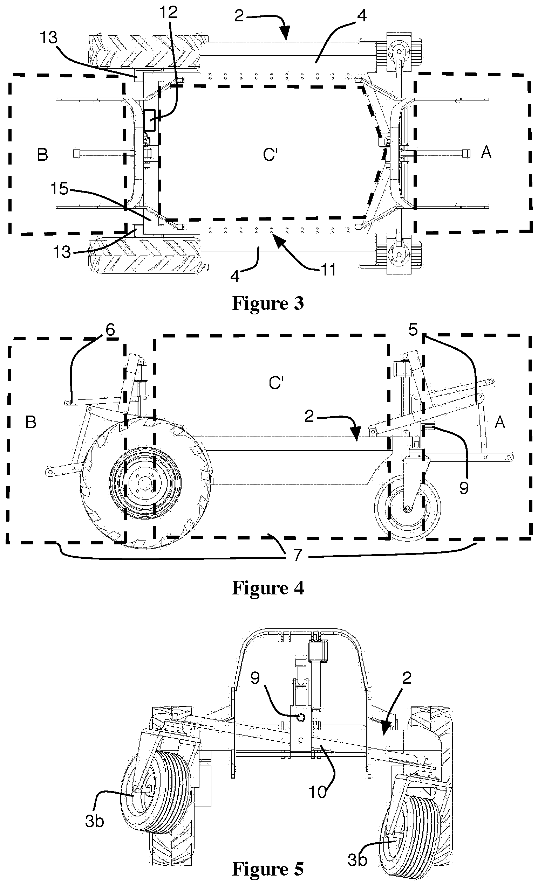

Les figures 3 et 4 illustrent les trois zones de travail 7 que comporte le tracteur. Elles sont réparties à l'avant pour la zone A, dans le cadre périphérique pour la zone C' et à l'arrière pour la zone B.

Au moins la zone de travail C' se prolonge au-dessus et au-dessous du cadre 2.

L'architecture selon l'invention permet par exemple de prévoir des premiers moyens outils 5 pouvant effectuer une tâche dans la zone de travail A, des seconds moyens outils 6 pouvant effectuer une tâche dans la zone de travail B et d'autres moyens outils et/ou un ou plusieurs opérateurs peuvent effectuer une tâche dans la zone C'.

Les batteries 8, en plus d'alimenter les deux moteurs 13 des roues 3a, permettent d'alimenter au moins un adaptateur rotatif 9 (souvent appelé « prise de force »). Grâce aux points de fixation multiples, ces adaptateurs peuvent être positionnés là où les besoins sont présents, par exemple à proximité d'outils à entrainer.

Le tracteur 1 comprend par ailleurs un boitier électronique 12 prévu pour interfacer avec les moyens de pilotage. Par exemple, le boîtier peut comporter un tensiomètre permettant de régler la vitesse du ou des moteurs de façon très précise. Du fait de l'utilisation d'une motorisation électrique, le tracteur peut être commandé très précisément, par exemple afin de maintenir dans la durée et de façon précise une vitesse donnée. Selon les besoins et les tâches à accomplir, le tracteur peut être piloté par un opérateur placé sur le tracteur ou à proximité de ce dernier, ou par un système de pilotage autonome, intégré au boîtier électronique 12.

Les roues non motorisées 3b sont de type roues folles, situées de préférence à l'avant du tracteur. Elles sont montées sur un axe transversal unique et pivotant 10. Cet axe pivotant permet par exemple de surmonter des obstacles ou des zones de sol non plat, tel que montré par exemple à la figure 5.

Les roues folles permettent au tracteur 1 d'avoir un centre de rotation au milieu de l'essieu des roues motrices 3a. Le tracteur peut donc effectuer un demi-tour sur lui-même. Cet aspect est très pratique voire indispensable dans un espace restreint, comme par exemple dans une serre. Les roues motrices électriques 3a sont bidirectionnelles. Elles peuvent, grâce à la configuration du tracteur, être tantôt placées en traction et tantôt placées en propulsion.

Les outils peuvent fonctionner au ras du sol et/ou dans le sol et/ou jusqu'à la hauteur désirée et/ou nécessaire pour le travail à effectuer. Un accès au sol est possible dans la zone C' grâce à l'ouverture dans le cadre. Cet espace est disponible pour placer un ou plusieurs outils et/ou un ou plusieurs opérateurs manœuvrant les outils et/ou un intervenant au niveau du sol. Si besoin, la zone C' permet également de faire le lien entre les outils disposés dans les zones de travail A et B.

Les moteurs électriques 13 placés dans les roues 3a permettent de dégager complètement la zone de travail C'. En effet, aucun élément de transmission mécanique n'est présent dans cet espace. La zone de travail 7 est donc totalement libre.

Les moteurs électriques 13 présentent un autre avantage. Le tracteur 1 étant peu encombrant et pouvant être adapté aux exigences d'espaces restreints ou confinés, il est préférable que le niveau sonore soit le plus faible possible. Les moteurs électriques 13 permettent de répondre à cette exigence. A contrario, dans une serre, le son émit par un tracteur à moteur thermique serait assourdissant. Les émanations de gaz de combustion poseraient également un problème pour les opérateurs à l'intérieur de la serre et pollueraient les cultures. Les moteurs électriques sont très silencieux, ne dégagent aucun gaz et sont ainsi sans contrainte pour les opérateurs et pour les cultures. Un tracteur électrique maniable tel que celui présenté est donc parfaitement adapté pour ce type de travaux. Les tâches complémentaires qui peuvent effectuées dans les zones A, B et C' permettent au tracteur d'intervenir de façon optimale, en particulier dans une serre, où l'espace disponible est très restreint. Le tracteur est également bien adapté pour intervenir dans des bâtiments d'élevage.

L'architecture du tracteur 1 lui confère un poids assez faible par rapport à la majorité des engins du même gabarit. Le tracteur est particulièrement utile sur les surfaces fragiles. Son poids lui permet de laisser le sol intact après son passage car il a un rapport poids/puissance particulièrement avantageux.

Selon les besoins de l'exploitant en terme d'outillages et du travail à effectuer, le nombre de batteries 8 peut être adapté, pour alléger le tracteur en cas de travail sur un sol fragile, ou au contraire en ajoutant des batteries afin d'augmenter l'autonomie et/ou la puissance disponible pour des outils.

### Exemples de scénarios de travail du tracteur

### Exemple 1 : récolte

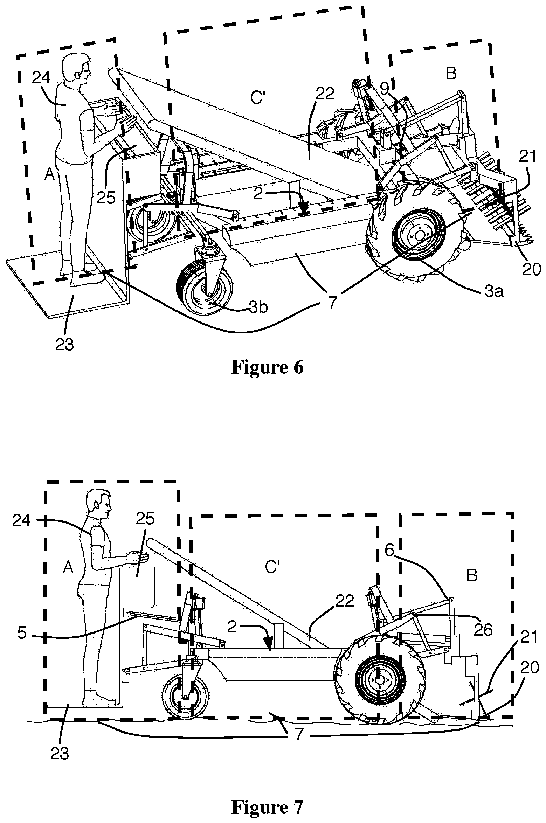

Les figures 6 et 7 représentent un exemple d'opération de récolte. Pour ce cas, le tracteur 1 est placé en mode traction. Pour ce faire, il suffit d'inverser la place des roues 3a entre elles afin que l'accroche des pneus soit compatible avec le mouvement d'avancée en traction. Une barre de coupe 20 située en zone de travail B permet de couper les plantes à récolter (des légumes feuilles, des plantes aromatiques/médicinales, etc). Le peigne rotatif 21 au dessus de la barre de coupe permet d'assister la récolte et de la conduire sur le convoyeur 22 attelé en zone C'. Ce convoyeur 22 est mû par un moteur électrique situé dans les rouleaux. Le moteur électrique est relié au boîtier de commande 12. Le convoyeur permet d'acheminer la récolte en hauteur, au niveau de la zone B. En A est attelé une plate-forme 23 qui permet d'accueillir un opérateur 24 et de stocker la récolte en cours dans un bac 25 situé devant lui.

Dans la zone de travail B, la barre de coupe est attelée à un système trois points 26. Le mouvement de coupe et de rabattement est impulsé par une prise de force 9. La hauteur et l'inclinaison de la lame se règlent par l'attelage trois points. La vitesse de la lame se règle via la prise de force 9.

Dans la zone de travail C', le convoyeur reçoit la récolte de la zone de travail B puis la porte jusqu'à la zone de travail C'. La rotation du convoyeur est assurée par un moteur électrique dont la vitesse peut être asservie à l'avance du tracteur. Un tracteur classique ne permettrait pas d'atteler un convoyeur en son milieu à cause de la cabine et du moteur.

Dans la zone de travail C, la plate-forme portée via un attelage trois points permet à l'opérateur 24 de se tenir debout tout en effectuant son travail (tri, conditionnement, etc). Il peut aussi vérifier de son emplacement le bon fonctionnement des outils et piloter l'appareil via une télécommande. La plate-forme peut aussi accueillir la récolte en cours dans le bac ou en entreposant les caisses à côté de l'opérateur.

Dans cet exemple de configuration du tracteur 1, une seule personne peut piloter et récolter tout en veillant au bon fonctionnement des opérations. La récolte est précise grâce à l'architecture du tracteur. La motorisation électrique 13 et la manœuvrabilité sont de précieux atouts pour le travail sous abris comme par exemple sous serre. L'opérateur peut récolter ce qui se trouve sur sa ligne de conduite ce qui diffère par exemple des récolteuses avec convoyeur attelées sur le côté des tracteurs classiques.

### Exemple 2 : Plantation

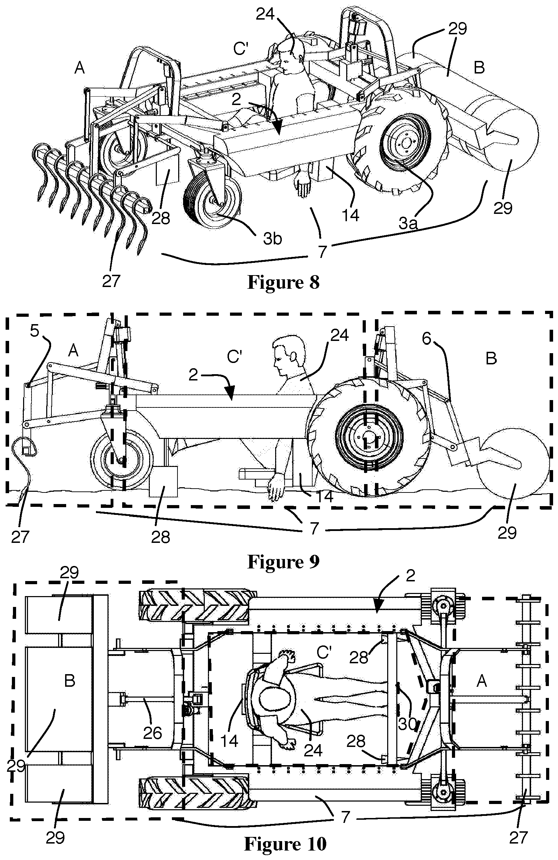

Les figures 8, 9 et 10 représentent une opération de plantation. Cette configuration du tracteur 1 pourrait aussi être une opération d'entretien des cultures (binage, désherbage manuel, rappui du sol) en modifiant légèrement les outils. Un vibroculteur 27 est ici attelé en zone de travail A, il permet d'affiner la terre. En zone de travail C' deux socs 28 permettent d'ouvrir des sillons. L'opérateur est assis à proximité du sol et peut planter manuellement des plants dans les sillons ouverts. En C' l'outil attelé possède différents rouleaux 29 qui viennent plomber le sol de part et d'autre du sillon ouvert. Cela permet de refermer la terre et de « chausser » les plants.

Dans la zone de travail A, le vibroculteur 27 est posé et la profondeur et l'inclinaison des dents sont réglés via l'attelage trois points.

Dans la zone de travail C', les socs 28 ouvreurs dessinent les sillons. Ils sont attelés sur les rails du châssis. Le siège 14 de l'opérateur 24 est situé proche de la terre de manière à ce que l'opérateur 24 soit en contact avec elle. Il peut ainsi planter, désherber, tailler, etc, tout en conduisant. La commande se fait avec un pédalier 30 situé sous les pieds (chacune des pédales fait avancer un moteur de roue 13, à la manière d'un chenillard). De plus, il peut voir ce qui se passe devant lui car la zone C' est ouverte. Dans un tracteur classique, il est impossible d'accéder au sol avec ses mains tout en conduisant du fait de la cabine.

Dans la zone de travail B, les rouleaux 29 sont attelés par un système trois points 26 classique. Les rouleaux 29 sont espacés de manière à plomber le sol sans écraser les plants nouvellement plantés. Le passage des rouleaux 29 en même temps que la plantation permet d'être parfaitement aligné avec le sillon.

L'opérateur 24 peut travailler en conduisant, avoir accès au sol (ce qui permet d'effectuer de nombreuses tâches, dont certaines ne sont possibles que par la main de l'homme) et utiliser trois outils en un seul passage.

### Exemple 3 : semi

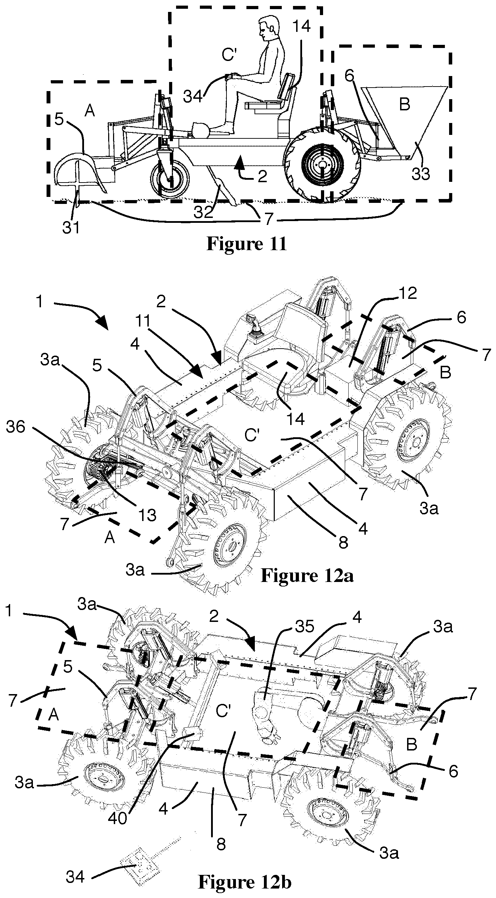

La figure 11 représente une opération de semi. Trois outils sont attelés au tracteur 1 : en zone de travail A une houe rotative 31 permet d'affiner et de préparer la terre. En zone de travail C' le semoir 32 est situé de manière à ce que le conducteur puisse surveiller l'opération (contact visuel) puis en zone de travail B un épandeur 33 permet de déposer des fertilisants sous forme de granules. L'opérateur est assis en hauteur dans la zone de travail C', de manière à pouvoir superviser l'avancement du tracteur 1 et le bon déroulement des opérations. Il pilote via une radiocommande 34 reliée au boîtier électronique 12.

Dans la zone de travail A, la houe rotative 31 (nom commercial « *rotavator* ») est attelée au tracteur 1 par l'attelage trois points 26. La houe est mue par une prise de force 9 frontale. La profondeur de travail est réglée par la position des bras du relevage trois points.

Dans la zone de travail C', le semoir 32 est attelé sur les rails du châssis 2. Il peut être alimenté en électricité par les batteries 8 (pour les semoirs pneumatiques ou à entraînement électrique par exemple). L'opérateur surplombe le semoir et a un contact visuel direct avec l'opération (ce qui est impossible dans le tracteur classique à cause du moteur). Un autre avantage consiste à pouvoir surveiller et régler le semoir directement sans avoir à sortir du tracteur 1.

Dans la zone de travail B, l'engrais est épandu en même temps que le semi, ce qui évite un passage supplémentaire et permet de préserver le sol (surtout lorsque le semi est effectué en conditions limites). Le distributeur rotatif de l'épandeur est actionné par la prise de force arrière.

Un seul passage du tracteur est nécessaire pour préparer le sol, semer et fertiliser. La zone de travail C' est telle que l'opérateur peut surveiller le semi tout en conduisant. De plus, il peut intervenir directement sur l'outil en cas de problème.

Dans l'exemple du tracteur 1 illustré aux figures 12a et 12b, le véhicule est muni de quatre roues 3a motorisées. Il peut par exemple avoir deux roues directrices pilotées chacune par un vérin de direction 36 qui, associé au différentiel électronique, permet d'obtenir la direction. Cette version bénéficie toujours des trois zones de travail 7. Dans l'exemple de la figure 12a, un attelage standard dans la zone A (la barre de poussée n'est pas représentée), un attelage standard dans la zone B et une barre porte outil pourvue d'une pluralité de points 11 porte outil dans la zone C'. Dans cet exemple, le tracteur 1 est piloté à l'aide d'un « joystick ». Dans la figure 12b, la configuration représentée permet à l'opérateur de se placer hors du véhicule, afin de piloter le tracteur 1 à distance via une radiocommande 34. Dans la zone central C' un bras robotisé 35 permet d'illustrer la grande diversité des outils 5, 6 interfaçables avec le tracteur 1. Dans cet exemple, le bras robotisé 35 exécute automatiquement des tâches. Sa perception peut être fournie par deux caméras 40 ou autres moyens de repérage positionnés sur une barre porte outils dans la zone centrale C'.

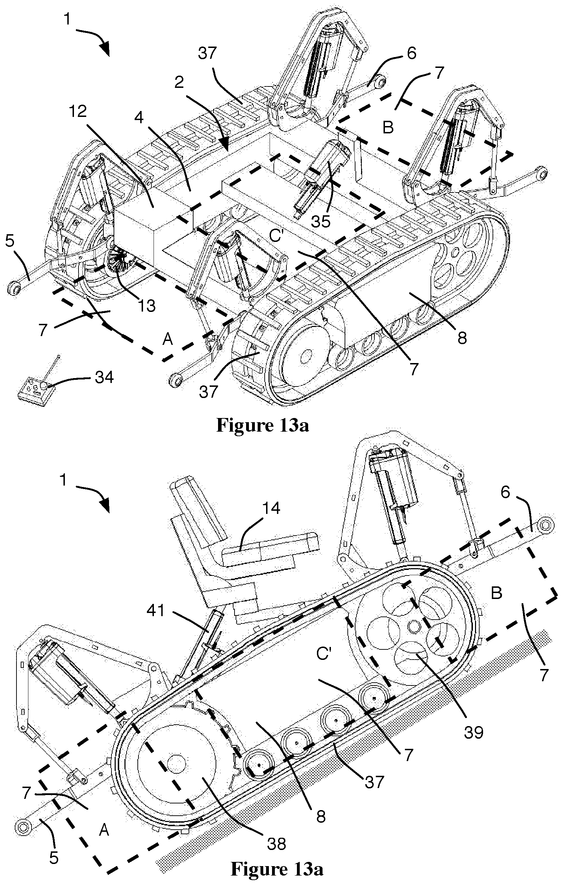

Dans l'exemple de réalisation du tracteur 1 illustré aux figures 13a et 13b, le tracteur est muni d'un train chenillé. Au moins deux moteurs 13 électriques entraînent au moins deux barbotins 38 qui entrainent chacun une chenille 37. La direction du tracteur 1 est donnée par différence de vitesse d'avance des chenilles 37. De la même façon que pour les autres exemples de réalisation, le cadre 2 périphérique permet de loger les batteries 8 sur les côtés, dans les longerons 4. Dans cet exemple, les batteries se trouvent à l'intérieur du train chenillé 3 entre le barbotin 38 et le galet tendeur 39. Ceci permet d'avoir un cadre 2 évidé en zone C' et de disposer des trois zones de travail 7. Dans la figure 13a, le pilotage s'effectue grâce à une radiocommande 34 par un opérateur 24 non présent sur le tracteur. En variante, le tracteur peut être autonome et naviguer dans les champs par exemple. En variante, un système de navigation et des capteurs GPS et/ou RTK par exemple, présents dans le boîtier électronique, peuvent permettre une navigation autonome. Les zones 7 de travail A et B présentent un système d'attelage standard permettant d'atteler des outils agricoles 5, 6. La zone centrale C' est équipée d'une barre porte-outils permettant d'atteler de nombreux outils, par exemple tondeuses, dents de cultivateur, caméra hyper spectrale pour détecter des maladies fongiques, et autres.

Dans la figure 13b, la zone centrale C'est équipée d'un siège 14 à correction de dévers. Le siège 14 peut être un poste de conduite. Dans une variante, celui-ci est uniquement un siège 14 de transport si le tracteur est autonome. Dans une autre variante, le tracteur est piloté par la parole, ce qui permet à l'opérateur 24 de conduire et/ou de réaliser des opérations culturales comme par exemple taille, récolte, et autres opérations, assis confortablement. Le siège 14 s'incline grâce à un vérin électrique 41 qui coopère avec ce dernier. Le système est asservi en position grâce à un inclinomètre présent dans le boitier électronique 12. Ce système permet de déplacer le centre de gravité de l'engin 1. Le centre de gravité est déporté en direction de la zone de la chenille 37 qui a le plus besoin d'adhérence : à l'avant lors du travail et/ou déplacement du tracteur sur des portions de terrain en montée et à l'arrière sur des portions en descente. Il est possible de lester le siège 14 pour accentuer l'effet voire le remplacer par une masse.

**Numéros de référence employés sur les figures**

| | | | |
|---|---|---|---|
| 1. | Tracteur | 23. | Plate-forme |
| 2. | Cadre périphérique | 24. | Opérateur |
| 3a. | Roues motrices | 25. | Bac |
| 3b. | Roues folles | 26. | Système trois points |
| 4. | Longerons | 27. | Vibroculteur |
| 5. | Premiers moyens outils | 28. | Soc |
| 6. | Seconds moyens outils | 29. | Rouleau |
| 7. | Zone de travail | 30. | Pédalier |
| 8. | Batteries | 31. | Houe rotative |
| 9. | Prise de force | 32. | Semoir |
| 10. | Axe pivotant des roues folles | 33. | Épandeur |
| 11. | Points de positionnement | 34. | Radiocommande |
| 12. | Boitier électronique | 35. | Bras robotisé |
| 13. | Moteur électrique | 36. | Vérin de direction |
| 14. | Siège de l'opérateur | 37. | Chenilles |
| 15. | Barre transversale | 38. | Barbotin |
| 20. | Barre de coupe | 39. | Galet tendeur40. Caméra |
| 21. | Peigne rotatif | 41. | Vérin de siège |
| 22. | Convoyeur | | |

## Revendications

1. Tracteur (1) multitâche comprenant une structure de base (2), des roues et/ou chenilles (3a, 3b), au moins un moteur électrique (13), des premiers moyens outils (5) susceptibles d'effectuer un travail dans une zone de travail A située d'un premier côté de la structure de base, des seconds moyens outils (6) susceptibles d'effectuer un travail dans une zone de travail B située du deuxième côté de la structure de base, un moyen de pilotage, la structure de base étant constituée d'un cadre périphérique (2) définissant une ouverture formant une zone de travail centrale (C'), au moins deux desdites roues et/ou chenilles comprenant une motorisation intégrée, la zone de travail centrale (C') étant dépourvue de tout organe de traction et/ou transmission en liaison avec le déplacement du tracteur, ledit tracteur étant **caractérisé en ce que** le cadre périphérique (2) comporte au moins deux longerons (4) portant au moins une batterie (8) qui alimente les moteurs (13) des roues (3a).

2. Tracteur (1) selon la revendication 1, dans lequel la zone de travail C' se prolonge au-dessus du cadre périphérique (2).

3. Tracteur (1) selon l'une des revendications 1 ou 2, dans lequel la zone de travail C' se prolonge au-dessous du cadre périphérique (2).

4. Tracteur (1) selon l'une quelconque des revendications précédentes, dans lequel le cadre périphérique comprend une pluralité de points (11) de positionnement d'outils.

5. Tracteur (1) selon l'une quelconque des revendications précédentes, dans lequel la zone de travail C' est située entre les roues et/ou chenilles du tracteur.

6. Tracteur (1) selon l'une quelconque des revendications précédentes, comprenant au moins un adaptateur rotatif (9) alimenté par lesdites batteries.

7. Tracteur (1) selon l'une quelconque des revendications précédentes, dans lequel au moins deux roues (3b) sont de type roues folles (3b), et préférablement non motorisées.

8. Tracteur (1) selon la revendication 7, dans lequel les roues folles sont montées sur un axe unique pivotant (10).

## Patentansprüche

1. Mehrzweck-Traktor (1), der eine Grundstruktur (2), Räder und/oder Raupen (3a, 3b), mindestens einen Elektromotor (13), erste Werkzeugeinrichtungen (5), die eine Arbeit in einem Arbeitsbereich A ausführen können, der sich auf einer ersten Seite der Grundstruktur befinden, zweite Werkzeugeinrichtungen (6), die eine Arbeit in einem Arbeitsbereich B ausführen können, der sich auf der zweiten Seite der Grundstruktur befindet, eine Steuereinrichtung enthält, wobei die Grundstruktur aus einem Umfangsrahmen (2) besteht, der eine Öffnung definiert, die einen zentralen Arbeitsbereich (C') bildet, wobei mindestens zwei der Räder und/oder Raupen eine integrierte Motorisierung enthalten, wobei der zentrale Arbeitsbereich (C') keinerlei Traktions- und/oder Antriebselement in Verbindung mit der Bewegung des Traktors enthält, wobei der Traktor **dadurch gekennzeichnet ist, dass** der Umfangsrahmen (2) mindestens zwei Längsträger (4) aufweist, die mindestens eine Batterie (8) tragen, die die Motoren (13) der Räder (3a) versorgt.

2. Traktor (1) nach Anspruch 1, wobei der Arbeitsbereich C' sich oberhalb des Umfangsrahmens (2) verlängert.

3. Traktor (1) nach einem der Ansprüche 1 oder 2, wobei der Arbeitsbereich C' sich unterhalb des Umfangsrahmens (2) verlängert.

4. Traktor (1) nach einem der vorhergehenden Ansprüche, wobei der Umfangsrahmen eine Vielzahl von Positionierungspunkten (11) von Werkzeugen enthält.

5. Traktor (1) nach einem der vorhergehenden Ansprüche, wobei der Arbeitsbereich C' sich zwischen den Rädern und/oder Raupen des Traktors befindet.

6. Traktor (1) nach einem der vorhergehenden Ansprüche, der mindestens einen von den Batterien gespeisten Drehadapter (9) enthält.

7. Traktor (1) nach einem der vorhergehenden Ansprüche, wobei mindestens zwei Räder (3b) von der Art Freilaufräder (3b) und vorzugsweise nicht motorisiert sind.

8. Traktor (1) nach Anspruch 7, wobei die Freilaufräder auf eine einzige Schwenkachse (10) montiert sind.

## Claims

1. Multipurpose tractor (1) comprising a base structure (2), wheels and/or tracks (3a, 3b), at least one electric motor (13), first tool means (5) that can perform work in a work area A located on a first side of the base structure, second tool means (6) that can perform work in a work area B located on the second side of the base structure, and a control means, the base structure consisting of a peripheral frame (2) defining an opening that forms a central work area (C'), at least two of said wheels and/or tracks comprising an integrated drive, the central work area (C') having no traction and/or transmission member connected to the movement of the tractor, said tractor being **characterized in that** the peripheral frame (2) comprises at least two side members (4) bearing at least one battery (8) which powers the motors (13) of the wheels (3a).

2. Tractor (1) according to Claim 1, wherein the work area C' extends above the peripheral frame (2).

3. Tractor (1) according to either of Claims 1 and 2, wherein the work area C' extends below the peripheral frame (2).

4. Tractor (1) according to any one of the preceding claims, wherein the peripheral frame comprises a plurality of tool positioning points (11).

5. Tractor (1) according to any one of the preceding claims, wherein the work area C' is located between the wheels and/or tracks of the tractor.

6. Tractor (1) according to any one of the preceding claims, comprising at least one rotary adapter (9) powered by said batteries.

7. Tractor (1) according to any one of the preceding claims, wherein at least two wheels (3b) are of the idle wheel type (3b), and are preferably not driven.

8. Tractor (1) according to Claim 7, wherein the idle wheels are mounted on a single pivoting shaft (10).
